# EUROPEAN PATENT APPLICATION

(11) **EP 0 597 163 A1**
(43) Date of publication of application: **18.05.1994**
(21) Application number: 92610078.5
(22) Date of filing: 12.11.1992
(51) Int. Cl.: B01D 1/20, B05B 3/10

(54) **An atomizer wheel assembly**

(71) Applicant: NIRO HOLDING A/S, DK-1260 Copenhagen K (DK)
(72) Inventor: Grane Henrik, Börge, DK-3520 Farum (DK)
(74) Representative: Indahl, Peter Jensen

(57) **Abstract**

An atomizer wheel has an annular chamber (10) defined by a wheel hub (9) a wheel bottom, a sidewall (8) and a wheel cover (6) having a central liquid inlet opening (12) in which the lower portion (20) of a liquid distributor (3) is received. The radially inner portion of cover (6) is constituted by an element (13) which together with said lower portion (20) delimits an air flow passage having a clearance (21). The element (13) and/or the lower portion (20) is made of a material to which the product to be dried only have little adhesion, so that it is diffucult for deposits to build up in and around the clearance (21).

## Description

The invention relates to an atomizer wheel assembly for use in a spray drying apparatus, having an annular chamber defined by a wheel hub, a wheel bottom, a wheel sidewall having ejection orifices, and a wheel cover which includes a central liquid inlet opening for receiving a lower portion of a liquid distributor, which lower portion has an external diameter being smaller than the internal diameter of the central inlet opening.

Such an atomizer wheel is well known in the art, e.g. from US-A-4,121,770 or the textbook "Spray Drying Handbook", fifth edition by K. Masters published in 1991 by Longman Scientific & Technical which are hereby incorporated into the specification by reference, and the wheel is mounted on a comparatively long spindle that extends centrally upwards through the liquid distributor to a drive which may rotate the spindle with the hub at very high rotational speeds being dependent on the feed rate of the product to be dried and the desired particle size of the dried product. Rotational speeds from 10.000 to 25.000 r.p.m. are not unusual and leads to very high relative velocities e.g. in the order of 40 m/s between the external surface of the stationary liquid distributor and the radially inner periphery of the wheel cover. In order to compensate for spindle flexings resulting from slight unbalances in the wheel in service it is necessary that the external diameter of the lower portion of the liquid distributor protruding into the central opening of the wheel cover is smaller than the internal diameter of this opening so that a clearance exists between the wheel cover and the liquid distributor.

During service the wheel will pump air from the drying chamber surrounding the wheel through the air gap between the upper side of the wheel cover and the atomizer casing and through the above mentioned clearance into the annular chamber, wherefrom the air will be ejected through the orifices in the wheel sidewall together with the product to be dried. If the assembly is cooled by cooling air, this air may also flow into the annular chamber.

The air pumping creates the well known problem of deposits forming on the lower portion of the liquid distributor and on the inner periphery of the wheel cover, because wet or semi-wet product droplets coming from the annular chamber adhere to the surfaces delimiting the above mentioned clearance and gets dried out by the air pumped into the annular chamber through the clearance. In order to diminish the air pumping the clearance should be as small as practically possible, but the small clearance on the other hand leads to scorching and blackening of the deposited product due to friction caused by the high relative velocities between the surfaces delimiting the clearance.

If no countermeasures are taken the blackened deposit will break loose and contaminate the dried product and render it unusable. The problem of deposits is augmented if the product to be dried is of a kind that becomes sticky when heated. Examples of such products are sodium caseinate, calcium caseinate, sorbitol, glucose and certain polymers such as polyvinylchloride. In the known atomizer wheels the contamination is reduced or avoided by interrupting the drying proces at regular intervals and manually cleaning away the deposits formed on the wheel cover and the liquid distributor. The manual cleaning is time consuming and reduces the effective capacity of the atomizer, especially when drying sodium or calcium caseinate where cleaning of the wheel may be required after only a few hours in service.

The object of the invention is to provide an atomizer wheel assembly in which the risk of deposits forming around the clearance between the wheel cover and the liquid distributor is reduced or avoided.

To achieve this, the atomiser wheel assembly according to the invention is characterized by at least one exchangeable element made of a material to which the product to be dried only have little adhesion, which element forms the lower portion of the liquid distributor or the radially inner portion of the wheel cover.

In this atomizer wheel assembly one of the two surfaces delimiting the above mentioned clearance is constituted by the outer surface of the element. The element interferes with the manner in which deposits build up in the clearance, by reducing to a large extent the amount of products adhering to said surface, such product adherence being a prerequisite for the formation of deposits.

Satisfactory results of low deposits formation in the clearance may be obtained with an embodiment having a traditional wheel cover and an element forming the lower portion of the liquid distributor. However, it is preferred that the element forms the radially inner portion of the wheel cover because a large part of the product to be dried will get in contact with the wheel cover when flowing into the annular chamber. Naturally there may also be used two elements forming respectively part of the wheel cover and of the liquid distributor so that both two surfaces delimiting the clearance are of a material to which the product to be dried only has little adhesion. This embodiment may be particularly suited for applications where the product to be dried becomes very sticky when heated.

Tests have surprisingly shown it possible to use an element of the above mentioned kind in an atomizer wheel assembly despite the fact that the element in service is subjected to very high mechanical loads originating from the very high rotational speeds of the wheel and from the impact of the liquid to be dried on the element. In many applications the liquid to be dried exerts an abrasive action on the wheel cover. Abrasive wear on the element may lead to an enlarged clearance between the wheel cover and the liquid distributor and thus to increased air pumping through the wheel. This adverse effect of using an element of a material being less wear resistant than steel is cured by exchanging the element with a new one when the wear exceeds acceptable limits.

The risk of deposits forming around the clearance is further reduced in a preferred embodiment in which the element, forming the radially inner portion of the wheel cover, includes an upwards facing surface which is bevelled with respect to the rotational axis of the wheel and terminates towards the liquid distributor in an edge encircling the central inlet opening. The bevelled upwards facing surface of the element acts as a guide for the air flowing into the annular chamber so that the air flow into the clearance becomes more uniform with less eddies upstream of the edge encircling the central opening. It is assumed that eddies in the air flow create irregularities over the inner rim of the wheel cover in the distribution of the liquid to be dried so that certain areas of the wheel cover alternating get wetted by the product and dried and heated by the air. The more uniform inflow of air thus promotes clean operation of the atomizer wheel. The upwards facing surface terminates towards the liquid distributor in an edge which at the position where the clearance is most restricted only leaves a very small area on which the deposits may build up.

When the air flowing through the clearance passes by the edge eddies are created in the air on the downstream side of the edge. The use of the element reduces the ability of the product to adhere to the surface delimiting the clearance to such an extent that the demand for a very small area at the most restricted portion of the clearance may be dispensed with. This makes it possible to promote a uniform flow of air through the whole clearance by designing the element with an annular surface facing towards the liquid distributor and being smoothly curved in the height direction of the element. The curvature of the annular surface can be selected to give an almost eddy-free air flow through the clearance e.g. by choosing a semi- elliptical sectional shape for the radially inner part of the element.

A number of materials are known to exhibit the hydrofobic properties needed for providing an element to which the product to be dried only has little adhesion. Among these polymeric materials, such as polyethylene or polyoxymetaethylene (POM) are well suited for the manufacture of the element, i.a. because they may be cast or machined to the desired shape in an uncomplicated manner. The fluorine-containing polymers, such as polytetrafluoroethylene and copolymers of tetrafluoroethylene and hexafluoro-propylene (FEP), are preferred because they are known to be very inert materials presenting very smooth surfaces. Polytetrafluoroethylene (PTFE) is the most preferred material for the element because PTFE is the most heat resistant material and may sustain temperatures being approx. 100°C higher than the maximum operational temperatures of the other polymeric materials.

In order to facilitate mounting of the element on the wheel cover the element preferable has a radially outwards extending flange portion which may be held in a mating recess in the wheel cover or may be fixed under a ring which is releasably secured to the wheel cover and has an underside with a radial width substantially corresponding to the radial extension of the upperside of the flange portion of the element. The ring distributes the fixing forces over the whole surface of the flange portion so that the fixing pressure on the flange portion is minimal which especially is advantageous when the ring is made of PTFE since this material has a tendency to yield under constant pressure.

The amount of material being consumed in the manufacture of the element is preferably reduced by designing the element with two outwards facing surfaces which are positioned above and below the flange portion, respectively, this making the flange portion substantially thinner than the height of the element. Yielding of the element under the influence of the large centrifugal forces occurring during rotation of the wheel can be prevented by designing the element and the wheel cover in such a manner that the above mentioned two surfaces are fully supported in the radial direction by the ring and/or the wheel cover.

The invention also relates to an element for an atomizer wheel of the above described kind, which element is characterized in that it is rotational symmetrical about a central axis and comprises a radially outwards extending flange portion positioned between two outwards facing surfaces and in that the element is made of a material to which the product to be dried only have little adhesion.

Examples of embodiments according to the invention are now described in further detail with reference to the purely schematical drawings on which
Fig. 1 is a partial axial sectional view of an embodiment of an atomizer wheel assembly according to the invention,
Fig. 2 and 3 are axial sectional views of a second and a third embodiment of an atomizer wheel according to the invention, and
Fig. 4 is a partial axial sectional view on a larger scale of the wheel cover and the liquid distributor of a fourth embodiment.

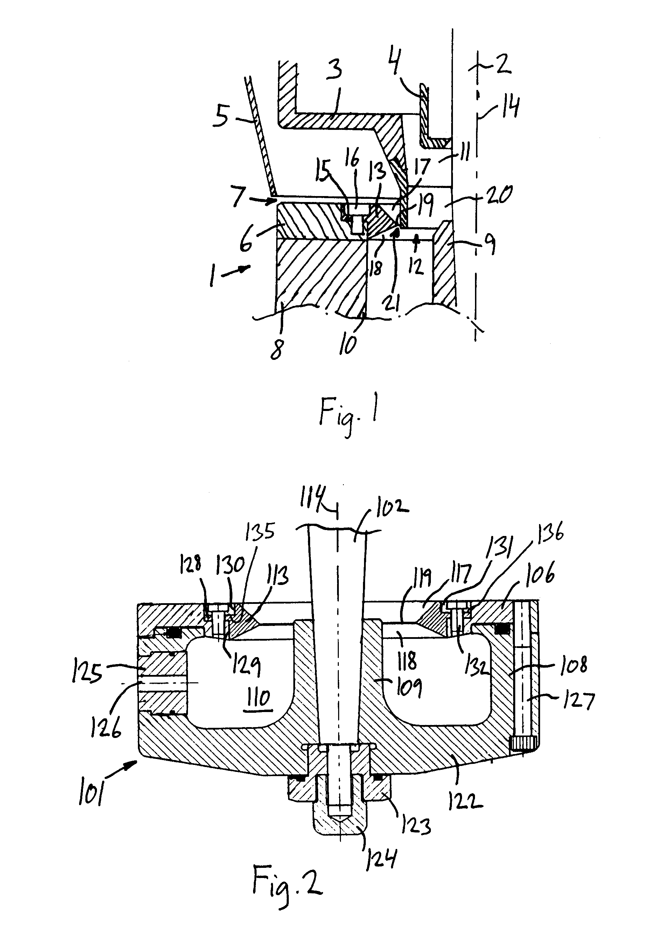

The atomizer wheel 1 illustrated in Fig. 1 is mounted on a drive spindle 2 extending centrally upwards through a liquid distributor 3 and a protective shield 4 in which a not shown journal for the lower spindle end is mounted. An atomizer casing 5 encloses the upper portion of the atomizer and terminates downwards at a short distance from the upper surface of a wheel cover 6 so that an air gap 7 is left between casing 5 and cover 6. The cover 6 is mounted on a wheel sidewall 8 which is integral with a central wheel hub 9 and delimits an only partially shown annular chamber 10.

The liquid or slurry to be atomized is fed from above into liquid distributor 3 and flows through a central passage 11 thereof to be discharged over a lower rim of the liquid distributor into the annular chamber 10.

An element 13 which is by and large rotational symmetrical about the rotational axis 14 of the atomiser wheel is mounted in a recess 15 in the upper side of the wheel cover by a plurality of fixing means such as screws or bolts 16 which are evenly distributed along the element and are screwed into threaded holes in the wheel cover so that the head of the bolts are received in circular bores in the upper part of the element whereby the element is fixed in position.

The element 13 has an upwards facing surface 17 and a downwards facing surface 18 which are bevelled in opposite directions with respect to rotational axis 14 and are joined in an edge 19, which encircles a central opening 12 in the wheel cover and is positioned at a short radial distance from the external side of a lower portion 20 of liquid distributor 3, thus leaving a clearance 21 between element 13 and lower portion 20.

During operation of the atomizer wheel hot air from the drying chamber is sucked in through air gap 7 and is guided by bevelled surface 17 down through clearance 19 and into annular chamber 10. Some of the product to be dried gets into contact with surface 18, but will not stick thereto because element 13 is of a material to which the product may not easily adhere. The lower portion 20 of distributor 3 is of a similar material and is fixed to the upper part of distributor 3 by not shown fastening means, such as screws or bolts or mating locking means formed in distributor 3 and the lower portion 20 respectively.

In the second embodiment shown in Fig. 2 details similar to details in Fig. 1 are denoted with the same reference numerals plus 100. For the sake of simplicity only the wheel 101 proper is shown, but in full sectional view so that the full extent of annular chamber 110 is seen.

The wheel sidewall 108 is through a wheel bottom 122 formed integrally with the wheel hub 109. Spindle 102 tapers towards its lower end and the wheel 101 is fixed on spindle 102 by a holder 123 and a lock nut 124. A plurality of bushings 125 each having a radially extending ejection orifice 126 are mounted in sidewall 108 evenly distributed along the periphery of the wheel. The cover 106 is fixed to sidewall 108 by a plurality of bolts 127 which are passed through bores in the sidewall, each being positioned between two bushings 125, and are screwed up into threaded bores in cover 106.

The element 113 has a radially outwards extending flange portion 128 positioned between a lower radially outwards facing surface 129 which abuts on a mating surface on wheel cover 106 and an upper radially outwards facing surface 130. A ring 131 having an underside 135 with a radial width corresponding to the radial extension of the upperside 136 of flange 128 is releasably fixed to the wheel cover by a plurality of fixing means such as screws or bolts 132 so that flange 128 is fixed between the underside of ring 131 and the upwards facing surface of the recess in the wheel cover.

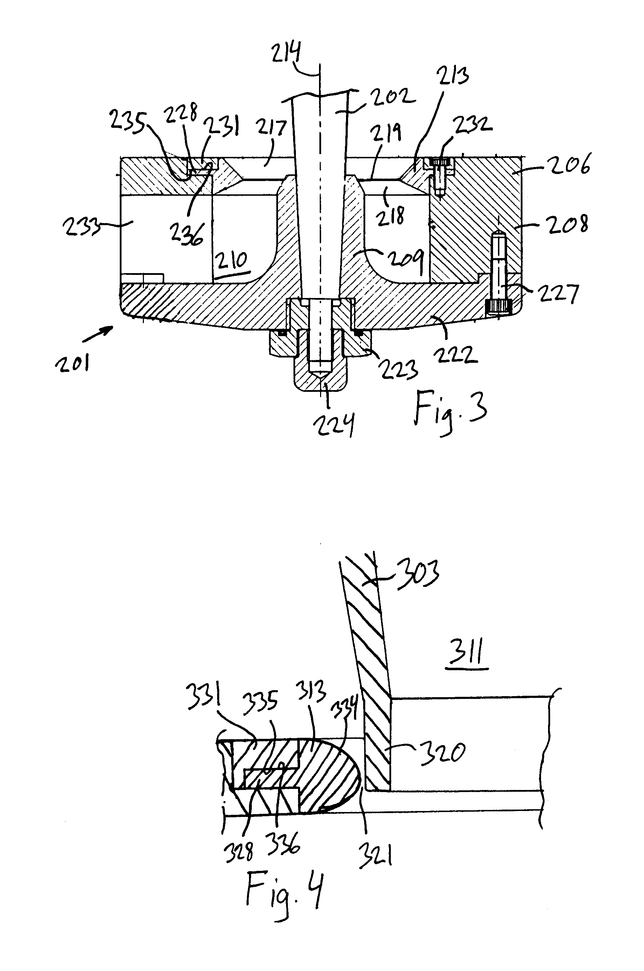

In the third embodiment shown in Fig. 3 details similar to details in Fig. 2 are denoted with the same reference numerals plus 100.

The cover 206 and the sidewall 208 are integrally formed and are mounted on the bottom 222 in a manner similar to the mounting of the cover 106 on sidewall 108 in the second embodiment. The ejection orifices are designed as radially extending slots 233 in sidewall 208.

As shown in Fig. 4 the element 313 can be designed with a concave annular surface 334 facing towards liquid distributor 303. Surface 334 is smoothly curved from the upper to the lower side of element 313 and consequently air flows to and away from clearence 321 as an approximately uniform flow with a minimum of eddies in the flow. Ring 331 is here formed with a recess in its underside, which recess receives and is filled with flange 328.

The skilled person may naturally within the invention exchange any detail of one embodiment with an appropriate detail of another embodiment and it is further possible to modify the design of the element e.g. so that the upper surface of the element is horisontal and terminates radially inwards in an edge encircling the central opening in the cover. Instead of using bolts or similar fastening means for fixing the element is it also possible to design the element and the part on which it is mounted with releasable interlocking means such as bayonet coupling means.

## Claims

1. An atomizer wheel assembly (1;101;201;301) for use in a spray drying apparatus, having an annular chamber (10; 110; 210) defined by a wheel hub (9; 109; 209), a wheel bottom, (122; 222), a wheel sidewall (8; 108; 208) having ejection orifices (126; 233), and a wheel cover (6; 106; 206; 306) which includes a central liquid inlet opening (12) for receiving a lower portion (20, 320) of a liquid distributor (3; 303) which lower portion has an external diameter being smaller than the internal diameter of the central inlet opening, characterized by at least one exchangeable element (13; 20; 113; 213; 313) made of a material to which the product to be dried only have little adhesion, which element forms the lower portion (20) of the liquid distributor or the radially inner portion (13; 113; 213; 313) of the wheel cover.

2. An atomizer wheel assembly according to claim 1, characterized in that the element (13; 113; 213), forming the radially inner portion of the wheel cover, includes an upwards facing surface (17; 117; 217) which is bevelled with respect to the rotational axis (14; 114; 214) of the wheel and terminates towards the liquid distributor in an edge (19; 119; 219) encircling the central inlet opening (12).

3. An atomizer wheel assembly according to claim 1, characterized in that the element (313), forming the radially inner portion of the wheel cover, has an annular surface (334) facing towards the liquid distributor and being smoothly curved in the height direction of the element.

4. An atomizer wheel assembly according to any of the claims 1-3, characterized in that the element (13; 20; 113; 213; 313) is made of a polymeric material, such as polyethylene or polyoxymetaethylene (POM), and preferably of a flourine-containing polymer, such as poly- tetraflouroethylene (PTFE).

5. An atomiser wheel assembly according to any of the claims 1-4, characterized in that the element (113, 213; 313) has a radially outwards extending flange portion (128; 228; 328).

6. An atomizer wheel assembly according to claim 5, characterized in that the wheel cover (106; 206; 306) has a releasably secured ring (131; 231; 331) having an underside (235; 335) with a radial width substantially corresponding to the radial extension of the upperside (236; 336) of the flange portion of the element.

7. An atomizer wheel assembly according to claim 6, characterized in that the element has two outwards facing surfaces (130; 129) which are positioned above and below the flange portion (128) respectively, and in that said two surfaces are fully supported in the radial direction by the ring (131) and/or the wheel cover (106).

8. An element for an atomizer wheel assembly of the kind claimed in any of the preceeding claims, characterized in that the element (113) is rotational symmetrical about a central axis (114) and comprises a radially outwards extending flange portion (128) positioned between two outwards facing surfaces (129, 130), and in that the element is made of a material to which the product to be dried only have little adhesion.

9. An element according to claim 8, characterized by a radially inwards facing edge portion (119) connecting an upwards facing surface (117) with a downwards facing surface (118) which two surfaces are bevelled in opposite directions with respect to the central axis (114).

10. An element according to claim 8, characterized by an inwards facing concave surface (334) which is smoothly curved in the height direction of the element (313).
